# EUROPEAN PATENT SPECIFICATION

(11) **EP 3 733 679 B1**
(45) Date of publication and mention of the grant of the patent: **02.03.2022**
(21) Application number: 20171898.8
(22) Date of filing: 28.04.2020
(51) Int. Cl.: C07F 7/10, C07F 7/18, C07F 5/00, C08F 136/06

(54) **FUNCTIONALIZED ALUMINUM REAGENTS AND ITS METHOD OF MANUFACTURING AND METHOD OF MAKING A FUNCTIONALIZED ELASTOMER**
FUNKTIONALISIERTE ALUMINIUMREAGENZIEN UND VERFAHREN ZU DEREN HERSTELLUNG UND VERFAHREN ZUR HERSTELLUNG EINES FUNKTIONALISIERTEN ELASTOMERS
RÉACTIFS FONCTIONNALISÉS D'ALUMINIUM ET SON PROCÉDÉ DE FABRICATION ET PROCÉDÉ DE FABRICATION D'UN ÉLASTOMÈRE FONCTIONNALISÉ

(30) Priority: 01.05.2019 US 201916400088; 01.05.2019 US 201962841297 P; 18.02.2020 US 202016793192
(43) Date of publication of application: 04.11.2020
(73) Proprietor: The Goodyear Tire & Rubber Company, Akron, OH 44316 (US)
(72) Inventor: FLOOK VIELHABER, Margaret, Kent, Ohio 44240 (US); ENSIGN, Seth Cody, Akron, Ohio 44333 (US)
(74) Representative: Kutsch, Bernd

(56) References cited:
- EP-A2- 0 004 739
- WO-A1-2005/044909
- JP-A- S54 147 191
- US-A- 4 215 014
- DATABASE CA [Online] CHEMICAL ABSTRACTS SERVICE, COLUMBUS, OHIO, US; HAYASHI, TETSUO ET AL: "Manufacture of polyolefins", XP055731009, retrieved from STN Database accession no. 1988:38593
- A. G. IBRAGIMOV ET AL: "([eta]5-C5H5)2TiCl2- hydroalumination of [alpha]-olefins with Et3Alhydroalumination of [alpha]-olefins with Et3Al", RUSSIAN CHEMICAL BULLETIN, vol. 47, no. 4, 1 April 1998 (1998-04-01), pages 691-694, XP055730937, US ISSN: 1066-5285, DOI: 10.1007/BF02495981
- QUIRK R P ET AL: "Butadiene polymerization using neodymium versatate-based catalysts: catalyst optimization and effects of water and excess versatic acid", POLYMER, ELSEVIER SCIENCE PUBLISHERS B.V, GB, vol. 41, no. 15, 1 July 2000 (2000-07-01), pages 5903-5908, XP004193905, ISSN: 0032-3861, DOI: 10.1016/S0032-3861(99)00775-2

## Description

### Background

Coordinative chain transfer polymerization (CCTP) using main group metals, i. e. a reversible chain transfer of polymeryl chains between chain growth active metal centers and chain growth inactive metal centers, has become an important strategy in insertion polymerization to reduce the amount of polymerization catalysts, to control the molecular weight and molecular weight distribution of polymers as well as to introduce chain end-functionalization by appropriate quenching of main group metal polymeryls. See Valente et al., Chem. Rev. 2013, 113, 3836 - 3857; Jian et al., Chem. Commun. 2010, 46, 3022 - 3024; German et al., Angew. Chem. Int. Ed. 2013, 52, 3438 - 3441; Norsic et al., Angew. Chem. Int. Ed. 2015, 54, 4631 -4635; and Makio et al., J. Am. Chem. Soc. 2013, 135, 8177 - 8180.

Most commonly, commercially available un-functionalized aluminum and zinc alkyls have been employed, with zinc alkyls much better performing in terms of transfer efficiency and thus molecular weight control. With respect to heteroatom-functionalized main group metal alkyls, recently homoleptic di(ω-aminoalkyl) magnesium reagents have been used as chain transfer reagents to yield end functionalized amino polyethylenyl magnesiums (Ottou et al., Macromolecules 2017, 50, 8372-8377.) Functionalized magnesium reagents were also employed to initiate polybutadiene chain growth to end-functionalized high trans polybutadiene (Leicht et al., Macromolecules 2018, 51, 763 - 770.), or with increased chain transfer numbers, to functionalized polybutadienes of less uniform stereochemistry (see WO-A-2010/013945.)

In contrast, both in organic synthesis and in polymer chemistry, heteroatom-functionalized aluminum reagents have scarcely been used as synthetically useful reactants for the transfer of functional group substituted carbon nucleophiles probably owing to drawbacks in the synthesis of homoleptic aluminum alkyls or the expectedly low chemoselectivity of mixed aluminum alkyls (Xu et al., Acc. Chem. Res. 2016, 49, 2158 - 2168; Gao et al., J. Am. Chem. Soc., 2010, 132, 10961 - 10963; and May et al., Org. Lett., 2011, 13, 3040 - 3043).

EP 0 004 739 A2, US 4,215,014, JP-S62-100506 A, JP-S54-147191 A and A. G. Ibragimov et al., Organometallic Chemistry, no. 4, pp. 712-715, 1998, describe a functionalized aluminum reagent as it is used in the method of making a functionalized elastomer.

R. P. Quirk et al., Polymer, no. 41 (2000), pp. 5903-5908, describes butadiene copolymerization using neodymiun versatate-based catalysts.

WO 2005/044909 A1 discloses a rubber mixture and a tire.

### Summary of the Invention

The invention relates to a functionalized aluminum reagent of claim 1, and to a method in accordance with claim 2 or 3.

Dependent claims refer to preferred embodiments of the invention.

In one aspect, the present invention uses a functionalized aluminum reagents of formula 1 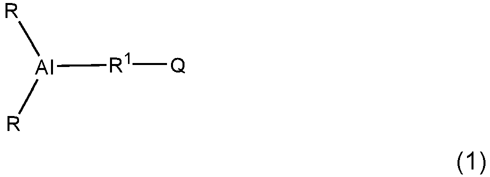 where R is a linear or branched alkyl group containing of from 1 to 8 carbon atoms, and R¹ is phenylene or a linear or branched alkane diyl group containing of from 2 to 10 carbon atoms or a combination of one or more phenylene groups and one or more linear or branched alkane diyl groups containing of from 1 to 10 carbon atoms; Q is of formula 2 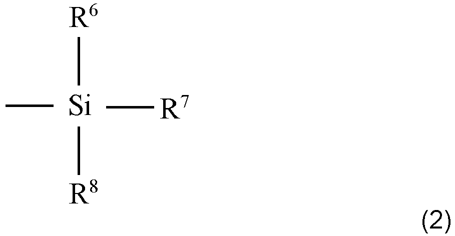 where R⁶, R⁷ and R⁸ are independently selected from a linear or branched alkyl group containing of from 1 to 3 carbon atoms or a group of formula 3 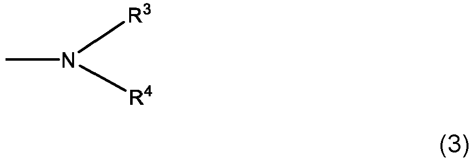 where R³ and R⁴ are independently selected from a phenyl or a linear or branched alkyl group containing of from 1 to 10 carbon atoms or R³ and R⁴ taken together with the nitrogen atom represent a nitrogen containing heterocyclic group containing of from 4 to 12 carbon atoms or R⁶, R⁷ and R⁸ taken together with the silicon atom represent a structure of formula 4 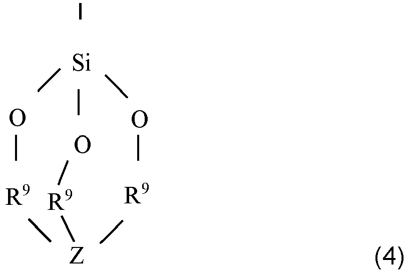 where R⁹ is a C1 to a C4 linear or branched alkane diyl group and Z is N or a group of formula 5 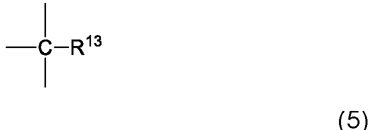 wherein R¹³ is selected from a C1 to a C8 alkyl group.

There is further disclosed a method of making functionalized aluminum reagents and a method of making a functionalized elastomer, and there is disclosed a rubber composition comprising the functionalized elastomer produced by this method, and a tire comprising the rubber composition.

### Brief Description of the Drawings

Fig. 1 shows a 2-dimensional Correlational Analysis: NOSY.
Fig. 2 shows a 2-dimensional Correlational Analysis: COSY.

### Description Example Embodiments of the Invention

There are disclosed functionalized aluminum reagents formula 1 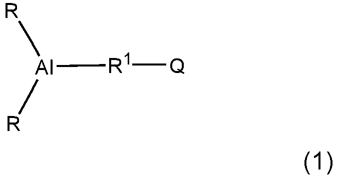 where R is a linear or branched alky group containing of from 1 to 8 carbon atoms and R¹ is phenylene (or a phenylene group) or a linear or branched alkane diyl group containing of from 2 to 10 carbon atoms or a combination of one or more phenylene groups and one or more linear or branched alkane diyl groups containing of from 1 to 10 carbon atoms; Q is of formula 2 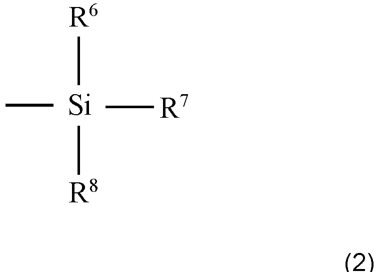 where R⁶, R⁷ and R⁸ are independently selected from a linear or branched alkyl group containing of from 1 to 3 carbon atoms or a group of formula 3 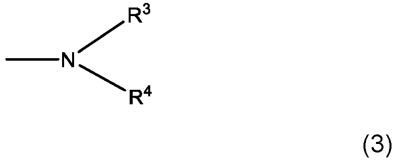 where R³ and R⁴ are independently selected from a phenyl or a linear or branched alkyl group containing of from 1 to 10 carbon atoms or R³ and R⁴ taken together with the nitrogen atom represent a nitrogen containing heterocyclic group containing of from 4 to 12 carbon atoms or R⁶, R⁷ and R⁸ taken together with the silicon atom represent a structure of formula 4 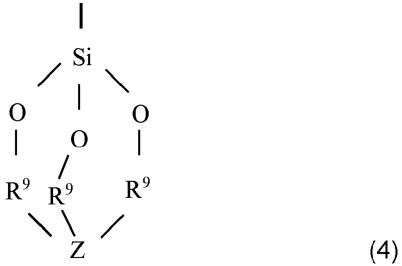 where R⁹ is selected from a C1 to a C4 linear or branched alkane diyl group and Z is N or a group of formula 5 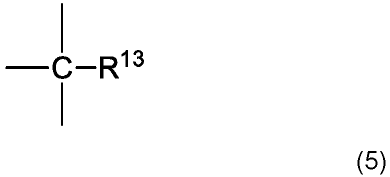 wherein R¹³ is selected from a C1 to a C8 alkyl group.

Functionalized aluminum reagents of formula 1 may be produced by reaction of an olefinic silane of formula 6 with a dialkyl aluminum hydride of formula 7 in the presence of a neodymium catalyst 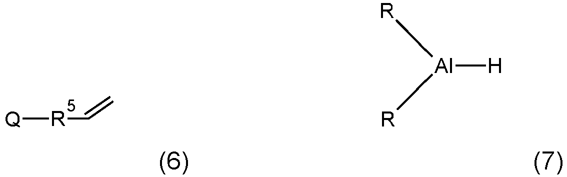 where R⁵ is phenylene (or a phenylene group) or a linear or branched alkane diyl group containing of from 1 to 9 carbon atoms or a combination of one or more phenylene groups and one or more linear or branched alkane diyl groups containing of from 1 to 10 carbon atoms, and R and Q are as previously defined.

The reaction of the compounds of formulas 6 and 7 may be done at or neat at a temperature ranging from 25 to 90°C for 12 to 72 hours. Preferably, the reaction may proceed in a hydrocarbon solvent in the presence of a neodymium (III) catalyst.

In one embodiment, the compound of formula 7 is diisobutyl aluminum hydride (DIBAL-H).

In various embodiments, the functionalized aluminum reagent of formula 1 is one of the following compounds A, B or C (Et = ethyl, Me= methyl):

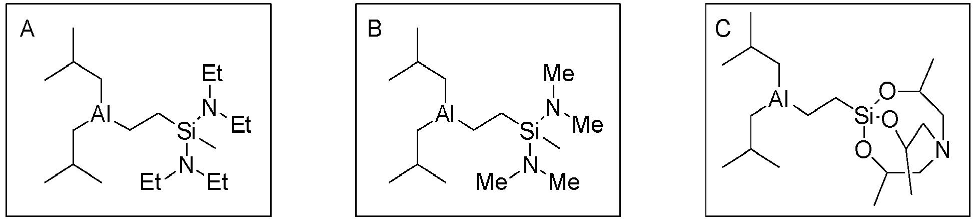

The functionalized aluminum reagents are useful for example as activators for lanthanide-based catalysts in polymerization of conjugated dienes.

The invention is further illustrated by the following examples.

### Example 1

### Preformed Neodymium Catalyst

The following reaction was performed in a nitrogen-filled glove box. To a 20 mL oven dried vial was added butadiene premix (6.0 mL, 15% w/w, 11.1 mmol, 40 equiv) and triisobutylaluminium (6.4 mL, 25% w/w, 5.58 mmol, 20 equiv). Neodymium(lll) versatate (560 µL, 0.50 M, 0.279 mmol, 1.0 equiv) was then added, the vial was sealed with a Teflon cap, and shaken for 60 minutes. Diethylaluminum chloride (700 µL, 25% w/w, 0.697 mmol, 2.5 equiv) was then added and the catalyst was shaken overnight to produce a preformed neodymium catalyst.

### Synthesis of Compound A

The following reaction was performed in a nitrogen-filled glove box. To a screw-cap NMR tube was added C₆D₆ (200 µL),bis(diethylamino)methylvinyl silane (89 µL, 0.25 mmol, 1.0 equiv), diisobutylaluminum hydride (275 µL, 1.0 M in toluene, 0.275 mmol, 1.1 equiv), and the preformed neodymium catalyst (242 µL, 0.0207 M, 0.0050 mmol, 2 mol %). The tube was sealed with a Teflon cap, removed from the glove box, and heated to 80 °C for 48 h. Analysis of the reaction mixture showed 81% conversion of the starting reagent.

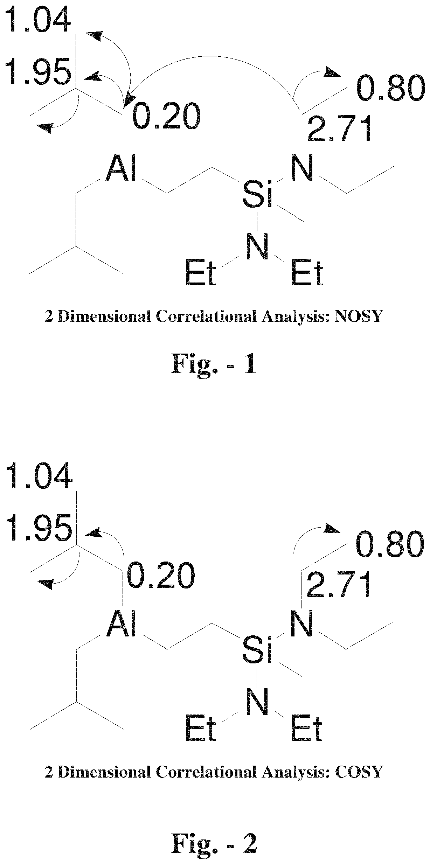

The reaction product was analyzed by 1D and 2D NMR with results given in Table 1 and Figs. 1 and 2. Values are given as chemical shift (δ) referenced to residual solvent.

¹H NMR: δ 7.15 ppm for C₆D₆.

**Table 1:**

| 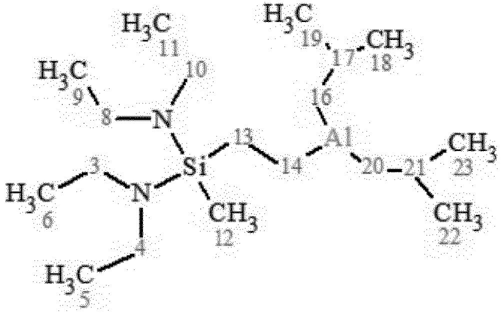 | | | | |
|---|---|---|---|---|
| **Atom** | **Predicted ¹H*** | **Predicted ¹³C*** | **Observed ¹H** | **Observed ¹³C** |
| 3,4,8,10 | 2.8-3.0 | 39.9 | 2.5-3.0 | 38-42 |
| 5,6,9,11 | 1.1-1.2 | 17.0 | 0.75-1.0 | 18.4 |
| 12 | 0.12 | -4.7 | 0.0-0.2 | -4.5 |
| 13,14 | 0.5-0.6 | 26.4 | 0.2-0.4 | 12-14 |
| 16,20 | 0.31-0.37 | 19.3 | 0.1-0.26 | 22 |
| 17,21 | 1.85-1.95 | 25.0 | 2.0-1.75 | 25-28 |
| 18,19,22,23 | 0.9-1.0 | 26.4 | 1.0-1.2 | 27 |

There is disclosed a method of making a functionalized elastomer, comprising the step of polymerizing a conjugated diene monomer in the presence of a lanthanide-based coordination polymerization catalyst activated with a functionalized aluminum reagent of formula 1 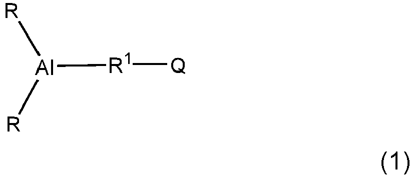 where R is a linear or branched alkyl group containing of from 1 to 8 carbon atoms and R¹ is phenylene or a linear or branched alkane diyl group containing of from 2 to 10 carbon atoms or a combination of one or more phenylene groups and one or more linear or branched alkane diyl groups containing of from 1 to 10 carbon atoms, Q is of formula 2 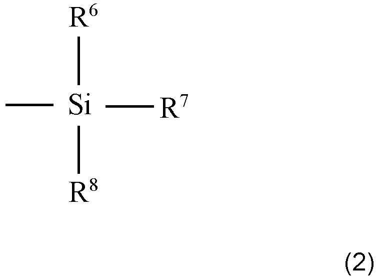 where R⁶, R⁷ and R⁸ are independently selected from a linear or branched alkyl group containing of from 1 to 3 carbon atoms or a group of formula 3 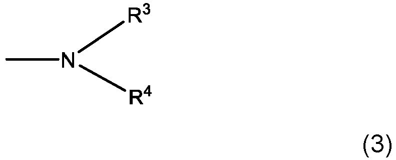 where R³ and R⁴ are independently selected from a phenyl group or a linear or branched alkyl group containing of from 1 to 10 carbon atoms or R³ and R⁴ taken together with the nitrogen atom represent a nitrogen containing heterocyclic group containing of from 4 to 12 carbon atoms or R⁶, R⁷ and R⁸ taken together with the silicon atom represent a structure of formula 4 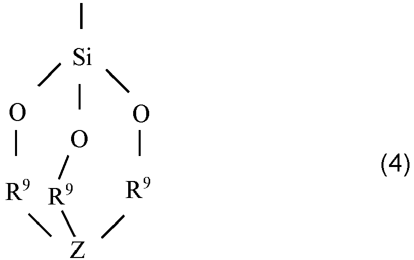 where R⁹ is selected from a C1 to a C4 linear or branched alkane diyl group and Z is N or a group of formula 5 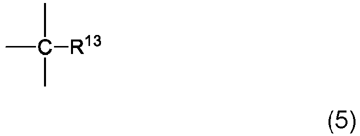 wherein R¹³ is selected from a C1 to a C8 alkyl group.

There is further disclosed a rubber composition comprising the functionalized elastomer produced by this method, and a tire comprising the rubber composition.

Polymerizations according to the method utilizes a lanthanide-based catalyst system. Suitable catalysts include neodymium-based catalysts, including neodymium carboxylates.

Such polymerizations are typically conducted in a hydrocarbon solvent that can be one or more aromatic, paraffinic, or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene, and the like, alone or in admixture.

In one embodiment, the neodymium catalyst system used in the process of this invention is made by preforming three catalyst components. These components are (1) the functionalized aluminum compound of formula 1, (2) a neodymium carboxylate, and (3) an organoboron salt compound.

The neodymium carboxylate utilizes an organic monocarboxylic acid ligand that contains of from 1 to 20 carbon atoms, such as acetic acid, propionic acid, valeric acid, hexanoic acid, 2-ethylhexanoic acid, neodecanoic acid, lauric acid, stearic acid and the like neodymium naphthenate, neodymium neodecanoate, neodymium octanoate, and other neodymium metal complexes with carboxylic acid containing ligands containing of from 1 to 20 carbon atoms.

The organoboron salt compound can be an ionic compound consisting of an organoboron anion with a cation.

Examples of the organoboron anion include tetraphenylborate ([BPh₄]⁻), tetrakis(monofluorophenyl)borate ([B(C₆F₅)₄]⁻), tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and decahydro-7,8-dicarbanium borate.

Examples of the cation include a carbonium cation, an oxonium cation, an ammonium cation, a phosphonium cation, a cycloheptatrienyl cation, and a ferrocenium cation containing a transition metal. Here, the carbonium cation includes trisubstituted carbonium cations such as a triphenylcarbonium cation ([Ph₃C]⁺) and a tri(substituted phenyl)carbonium cation, and a more specific example of the tri(substituted phenyl)carbonium cation includes a tri(methylphenyl)carbonium cation. Examples of the ammonium cation include: trialkylammonium cations such as a trimethylammonium cation, a triethylammonium cation ([NEt₃H]⁺), a tripropylammonium cation, and a tributylammonium cation; N,N-dialkylanilinium cations such as a N,N-dimethylanilinium cation ([PhNMe₂H]⁺), a N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation.

Examples of the organoboron salt compound include [Ph₃C][B(C₆F₅)₄], [PhNMe₂H][BPh₄], and [NEt₃H][BPh₄], [PhNMe₂H][B(C₆F₅)₄].

An organoboron compound having the same function as that of the organoboron salt compound, such as B(C₆F₅)₃, can also be used.

Functionalized aluminum reagents of formula 1 and 2 may be produced by reaction of a compound of formula 6 with a dialkyl aluminum hydride of formula 7 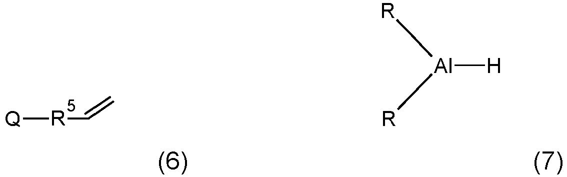 where R⁵ is phenylene group or a linear or branched alkane diyl group containing of from 1 to 9 carbon atoms or a combination of one or more phenylene groups and one or more linear or branched alkane diyl groups containing of from 1 to 10 carbon atoms, and R and Q are as previously defined.

The reaction of the compounds of formulas 6 and 7 may be done at or neat at a temperature ranging from 25 to 90°C for 12 to 72 hours. Preferably, the reaction may proceed in a hydrocarbon solvent in the presence of a neodymium (III) catalyst.

In one embodiment, the compound of formula 4 is diisobutyl aluminum hydride (DIBAL-H).

The concentration of the total catalyst system employed of course, depends upon factors such as purity of the system, polymerization rate desired, temperature and other factors. Therefore, specific concentrations cannot be set forth except to say that catalytic amounts are used.

Temperatures at which the polymerization reaction is carried out can be varied over a wide range. Usually the temperature can be varied from extremely low temperatures such as -60°C up to high temperatures, such as 150°C. or higher. Thus, the temperature is not a critical factor of the invention. It is generally preferred, however, to conduct the reaction at a temperature in the range of from 10°C. to 90°C. The pressure at which the polymerization is carried out can also be varied over a wide range. The reaction can be conducted at atmospheric pressure or, if desired, it can be carried out at sub-atmospheric or super-atmospheric pressure. Generally, a satisfactory polymerization is obtained when the reaction is carried out at about autogenous pressure, developed by the reactants under the operating conditions used.

Examples of useful functionalized aluminum compounds of formula 1 include but are not limited to compounds such as the following compounds A, B or C (Et = ethyl and Me = methyl):

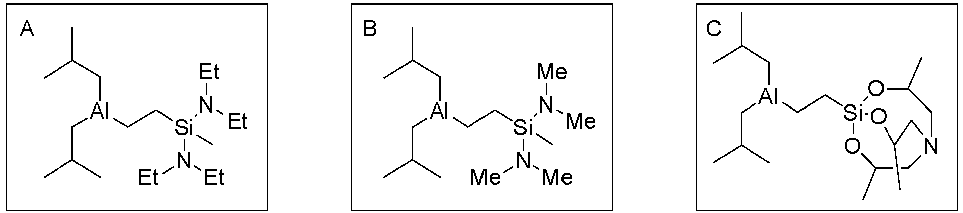

The polymerization can be quenched or terminated by the addition of a functional terminator, an alcohol or another protic source, such as water.

In one embodiment, the polymerization is terminated using a functional terminator. By functional terminator, it is meant an organic compound capable of terminating the polymerization reaction, wherein the organic compound is substituted with a functional group comprising at least one heteroatom selected from phosphorus, boron, oxygen, halogens and silicon.

In one embodiment, the functional terminator comprises at least one functional group selected from the group consisting of phosphane, phosphonic acid, phosphate, phosphodiester, phosphotriester, silyl, alklysilyl, alkoxysilyl, and siloxy.

Useful functional terminators include but are not limited to tetraethoxysilane, n-octyltriethoxysilane, 3-chloropropyltriethoxysilane, and chlorodiphenylphosphine.

Suitable monomers for use in the polymerization are conjugated diene monomers and functionalized versions thereof. Suitable conjugated diene monomers include 1,3-butadiene and isoprene. Other suitable conjugated diene monomers include 2,3-dimethyl-1,3-butadiene, piperylene, 3-butyl-1,3-octadiene, 2-phenyl-1,3-butadiene, and the like, and combinations thereof.

The use of functional aluminum-based chain transfer reagents of formula 1 imparts functionality on the end of every polymer chain end to produce a functionalized polymer. By combining the technique with known functionalization techniques such as termination with functional terminators or copolymerization with functional monomers, the polymerization results in stereoregular polymers that contain functionality on both ends, as well as in-chain. Either high-cis or high-trans polymers can be made through changes to the catalyst system, without affecting the functionalization reactions. By stereoregular, it is meant that the polymer microstructure includes at least 80 percent by weight of monomer residues (i.e., polymer subunits derived from a given monomer) in the cis 1,4- configuration, or 90 percent by weight of monomer residues in the trans 1,4- configuration. In one embodiment, the polymer contains at least 85 percent by weight of monomer residues in cis 1,4- configuration. In one embodiment, the polymer contains at least 95 percent by weight of monomer residues in trans 1,4- configuration.

The functionalized polymer made using the methods of the invention may be compounded into a rubber composition.

The rubber composition may optionally include, in addition to the functionalized polymer, one or more rubbers or elastomers containing olefinic unsaturation. The phrases "rubber" or "elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect, the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including those disclosed in U.S. Patent Nos. 6,242,534; 6,207,757; 6,133,364; 6,372,857; 5,395,891; or 6,127,488, and plasticized starch composite filler including that disclosed in U.S. Patent No. 5,672,639. Such other fillers may be used in an amount ranging from 1 to 30 phr.

In one embodiment, the rubber composition may contain a conventional sulfur containing organosilicon compound. In one embodiment, the sulfur containing organosilicon compounds are 3,3'-bis(trimethoxy or triethoxy silylpropyl) polysulfides. In one embodiment, the sulfur containing organosilicon compounds are 3,3'-bis(trieth-oxysilylpropyl) disulfide and/or 3,3'-bis(triethoxysilylpropyl) tetrasulfide.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the resulting vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

## Claims

1. A functionalized aluminum reagent selected from the group consisting of A, B or C as follows with Et = ethyl and Me = methyl:

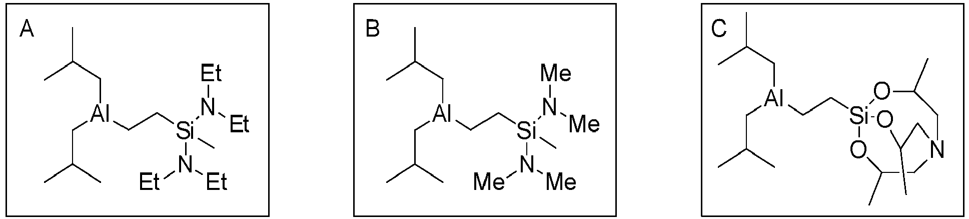

2. A method of making a functionalized aluminum reagent, the method comprising the step of reaction of an olefinic silane 6 with a dialkyl aluminum hydride 7 in the presence of a neodymium catalyst 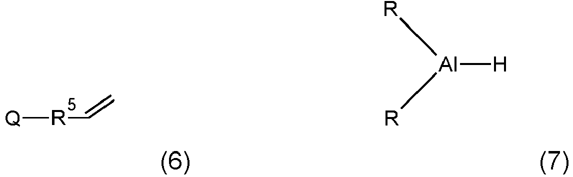
wherein R⁵ is phenylene or a linear or branched alkane diyl group containing of from 1 to 9 carbon atoms, or a combination of one or more phenylene groups and one or more linear or branched alkane diyl groups containing of from 1 to 10 carbon atoms, and R is a linear or branched alkane or alkyl group containing of from 1 to 8 carbon atoms; Q is of formula 2 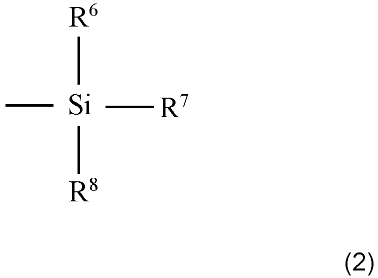
wherein R⁶, R⁷ and R⁸ are independently selected from a linear or branched alkyl group containing of from 1 to 3 carbon atoms or a group of formula 3 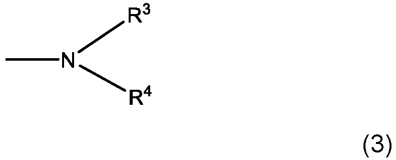
where R³ and R⁴ are independently selected from a phenyl or a linear or branched alkyl group containing of from 1 to 10 carbon atoms or R³ and R⁴ taken together with the nitrogen atom represent a nitrogen containing heterocyclic group containing of from 4 to 12 carbon atoms or R⁶, R⁷ and R⁸ taken together with the silicon atom represent a structure of formula 4 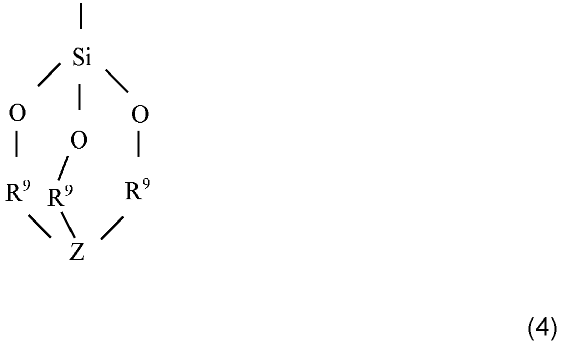
wherein R⁹ is selected from a C1 to C4 linear or branched alkane diyl group and Z is N or a group of formula 5 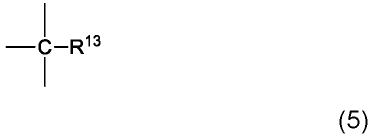
wherein R¹³ is selected from a C1 to C8 alkyl group.

3. A method of making a functionalized elastomer comprising the step of polymerizing a conjugated diene monomer in the presence of a lanthanide-based coordination polymerization catalyst activated with a functionalized aluminum reagent, wherein the functionalized aluminum reagent is of formula 1 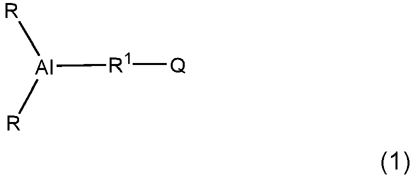
wherein R is a linear or branched alkyl group containing of from 1 to 8 carbon atoms, and R¹ is phenylene or a linear or branched alkane diyl group containing of from 2 to 10 carbon atoms or a combination of one or more phenylene groups and one or more linear or branched alkane diyl groups containing of from 1 to 10 carbon atoms, Q is of formula 2 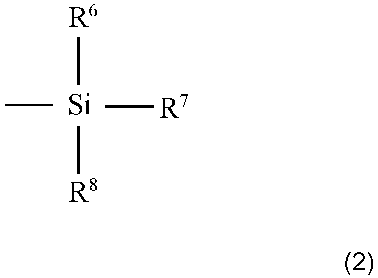
wherein R⁶, R⁷ and R⁸ are independently selected from a linear or branched alkyl group containing of from 1 to 3 carbon atoms or a group of formula 3 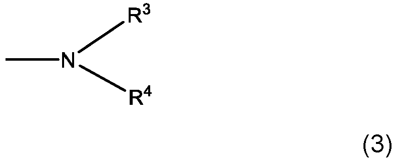
where R³ and R⁴ are independently selected from a phenyl or a linear or branched alkyl group containing of from 1 to 10 carbon atoms, or R³ and R⁴ taken together with the nitrogen atom represent a nitrogen containing heterocyclic group containing of from 4 to 12 carbon atoms, or R⁶, R⁷ and R⁸ taken together with the silicon atom represent a structure of formula 4 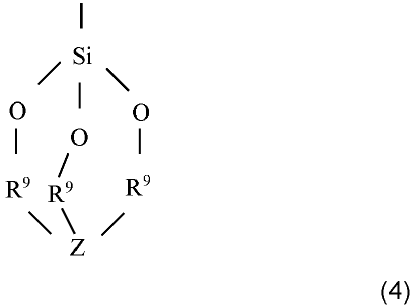
wherein R⁹ is selected from a C1 to a C4 linear or branched alkane diyl group and Z is N or a group of formula 5 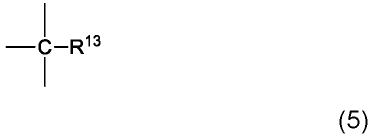
wherein R¹³ is selected from a C1 to a C8 alkyl group.

4. The method of claim 3 wherein the functionalized aluminum reagent is selected from the group consisting of A, B or C as follows with Et = ethyl and Me = methyl:

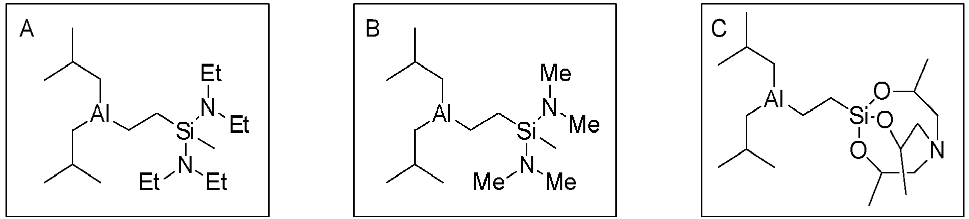

## Patentansprüche

1. Funktionalisiertes Aluminiumreagens, das aus der Gruppe ausgewählt ist, die aus A, B oder C wie folgt mit Et = Ethyl und Me = Methyl besteht:

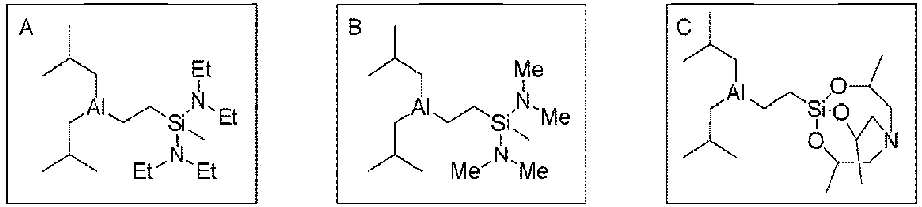

2. Verfahren zum Herstellen eines funktionalisierten Aluminiumreagens, wobei das Verfahren den Schritt einer Reaktion eines olefinischen Silans 6 mit einem Dialkylaluminiumhydrid 7 in der Gegenwart eines Neodym-Katalysators umfasst 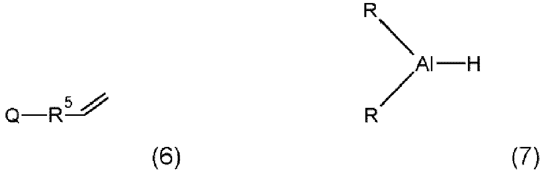
wobei R⁵ Phenylen oder eine lineare oder verzweigte Alkandiylgruppe, die von 1 bis 9 Kohlenstoffatome enthält, oder eine Kombination aus einer oder mehreren Phenylengruppen und einer oder mehreren linearen oder verzweigten Alkandiylgruppen, die von 1 bis 10 Kohlenstoffatome enthalten, ist, und R eine lineare oder verzweigte Alkan- oder Alkylgruppe ist, die von 1 bis 8 Kohlenstoffatome enthält; Q die Formel 2 aufweist 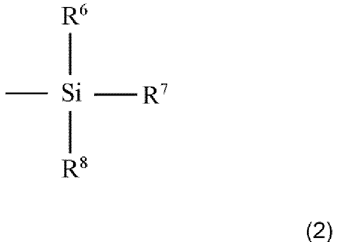
wobei R⁶, R⁷ und R⁸ unabhängig aus einer linearen oder verzweigten Alkylgruppe, die von 1 bis 3 Kohlenstoffatome enthält, oder einer Gruppe der Formel 3 ausgewählt sind 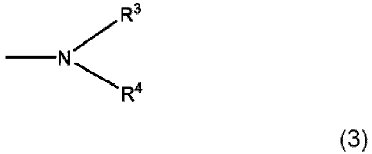
wobei R³ und R⁴ unabhängig aus einem Phenyl oder einer linearen oder verzweigten Alkylgruppe, die von 1 bis 10 Kohlenstoffatome enthält, ausgewählt sind, oder R³ und R⁴ zusammengenommen mit dem Stickstoffatom eine stickstoffhaltige heterocyclische Gruppe, die von 4 bis 12 Kohlenstoffatome enthält, darstellen, oder R⁶, R⁷ und R⁸ zusammengenommen mit dem Stickstoffatom eine Struktur der Formel 4 darstellen 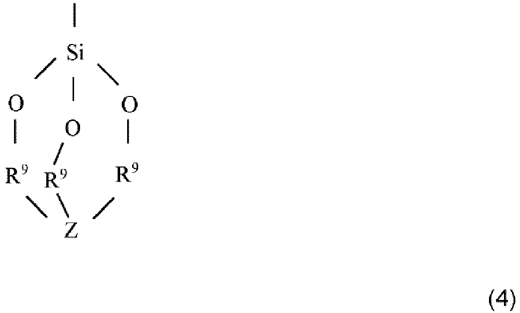
wobei R⁹ aus einer linearen oder verzweigten C1- bis C4-Alkandiylgruppe ausgewählt ist und Z N oder eine Gruppe der Formel 5 ist 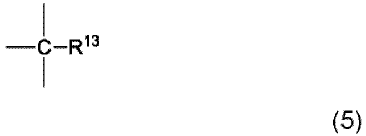
wobei R¹³ aus einer C1- bis C8-Alkylgruppe ausgewählt ist.

3. Verfahren zum Herstellen eines funktionalisierten Elastomers, das den Schritt eines Polymerisierens eines konjugierten Dienmonomers in der Gegenwart eines Koordinationspolymerisationskatalysators auf Lanthanidbasis umfasst, aktiviert mit einem funktionalisierten Aluminiumreagens, wobei das funktionalisierte Aluminiumreagens die Formel 1 aufweist 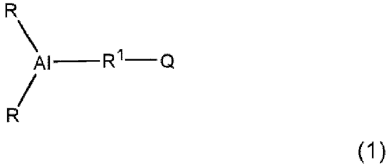
wobei R eine lineare oder verzweigte Alkylgruppe ist, die von 1 bis 8 Kohlenstoffatome enthält, und R¹ Phenylen oder eine lineare oder verzweigte Alkandiylgruppe, die von 2 bis 10 Kohlenstoffatome enthält, oder eine Kombination aus einer oder mehreren Phenylengruppen und einer oder mehreren linearen oder verzweigten Alkandiylgruppen, die von 1 bis 10 Kohlenstoffatome enthalten, ist, Q die Formel 2 aufweist 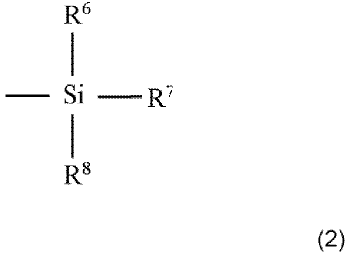
wobei R⁶, R⁷ und R⁸ unabhängig aus einer linearen oder verzweigten Alkylgruppe, die von 1 bis 3 Kohlenstoffatome enthält, oder einer Gruppe der Formel 3 ausgewählt sind 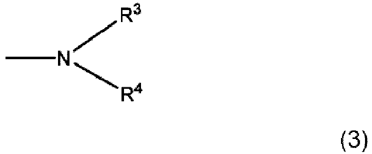
wobei R³ und R⁴ unabhängig aus einem Phenyl oder einer linearen oder verzweigten Alkylgruppe, die von 1 bis 10 Kohlenstoffatome enthält, ausgewählt sind, oder R³ und R⁴ zusammengenommen mit dem Stickstoffatom eine stickstoffhaltige heterocyclische Gruppe, die von 4 bis 12 Kohlenstoffatome enthält, darstellen, oder R⁶, R⁷ und R⁸ zusammengenommen mit dem Stickstoffatom eine Struktur der Formel 4 darstellen 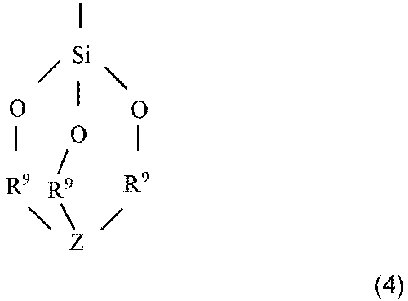
wobei R⁹ aus einer linearen oder verzweigten C1- bis C4-Alkandiylgruppe ausgewählt ist und Z N oder eine Gruppe der Formel 5 ist 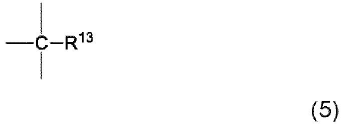
wobei R¹³ aus einer C1- bis C8-Alkylgruppe ausgewählt ist.

4. Verfahren nach Anspruch 3, wobei das funktionalisierte Aluminiumreagens aus der Gruppe ausgewählt ist, die aus A, B oder C wie folgt mit Et = Ethyl und Me = Methyl besteht:

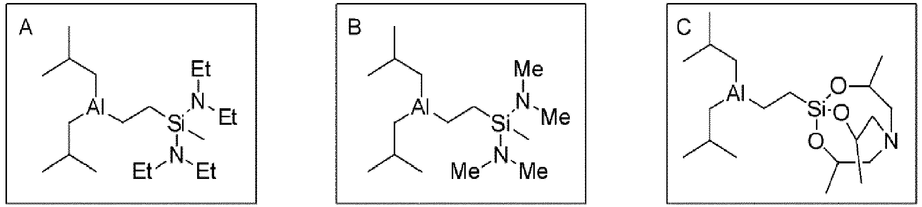

## Revendications

1. Réactif fonctionnalisé à base d'aluminium qui est choisi parmi le groupe constitué par A, B ou C tels qu'ils sont indiqués ci-après, dans lequel Et représente un groupe éthyle et Me représente un groupe méthyle :

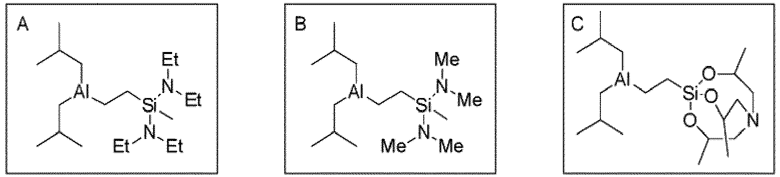

2. Procédé de préparation d'un réactif fonctionnalisé à base d'aluminium, le procédé comprenant l'étape dans laquelle on fait réagir un silane oléfinique 6 avec un hydrure de dialkylaluminium 7 en présence d'un catalyseur à base de néodyme : 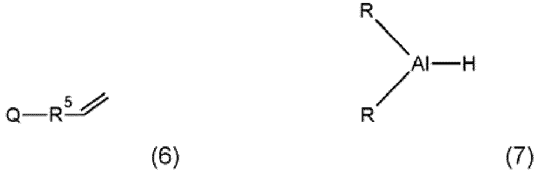
dans lequel R⁵ représente un groupe phénylène ou un groupe alcanediyle à chaîne droite ou à chaîne ramifiée qui contient de 1 à 9 atomes de carbone, ou une combinaison d'un ou de plusieurs groupes phénylène et d'un ou de plusieurs groupes alcanediyle à chaîne droite ou à chaîne ramifiée qui contiennent de 1 à 10 atomes de carbone, et R représente un groupe alcane ou un groupe alkyle à chaîne droite ou à chaîne ramifiée qui contient de 1 à 8 atomes de carbone ; Q répond à la formule 2 : 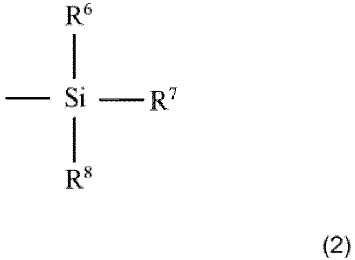
dans laquelle R⁶, R⁷ et R⁸ sont choisis de manière indépendante parmi un groupe alkyle à chaîne droite ou à chaîne ramifiée qui contient de 1 à 3 atomes de carbone ou un groupe répondant à la formule 3 : 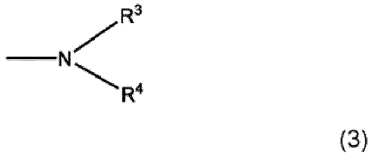
dans laquelle R³ et R⁴ sont choisis de manière indépendante parmi un groupe phényle ou un groupe alkyle à chaîne droite ou à chaîne ramifiée qui contient de 1 à 10 atomes de carbone, ou bien R³ et R⁴ pris ensemble avec l'atome d'azote représentent un groupe hétérocyclique contenant un ou plusieurs atomes d'azote, qui contient de 4 à 12 atomes de carbone ou bien R⁶, R⁷ et R⁸ pris ensemble avec l'atome de silicium représentent une structure qui répond à la formule 4 : 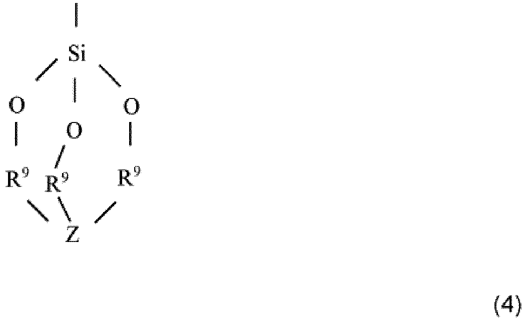
dans laquelle R⁹ est choisi parmi un groupe alcanediyle à chaîne droite ou à chaîne ramifiée qui contient de 1 à 4 atomes de carbone et Z représente un atome d'azote ou un groupe qui répond à la formule 5 : 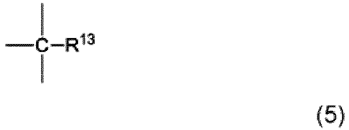
dans laquelle R¹³ est choisi parmi un groupe alkyle qui contient de 1 à 8 atomes de carbone.

3. Procédé de préparation d'un réactif fonctionnalisé à base d'aluminium, le procédé comprenant l'étape dans laquelle on procède à une polymérisation d'un monomère diénique conjugué en présence d'un catalyseur de polymérisation par coordination, à base de lanthanide, ledit catalyseur étant activé avec un réactif fonctionnalisé à base d'aluminium ; dans lequel le réactif fonctionnalisé à base d'aluminium répond à la formule 1 : 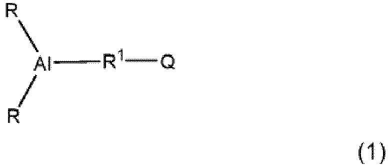
dans laquelle R représente un groupe alkyle à chaîne droite ou à chaîne ramifiée qui contient de 1 à 8 atomes de carbone et R¹ représente un groupe phénylène ou un groupe alcanediyle à chaîne droite ou à chaîne ramifiée qui contient de 2 à 10 atomes de carbone ou une combinaison d'un ou de plusieurs groupes phénylène et d'un ou de plusieurs groupes alcanediyle à chaîne droite ou à chaîne ramifiée qui contiennent de 1 à 10 atomes de carbone, Q répondant à la formule 2 : 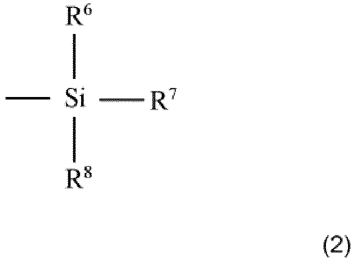
dans laquelle R⁶, R⁷ et R⁸ sont choisis de manière indépendante parmi un groupe alkyle à chaîne droite ou à chaîne ramifiée qui contient de 1 à 3 atomes de carbone ou un groupe répondant à la formule 3 : 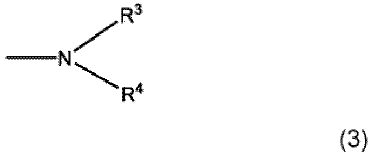
dans laquelle R³ et R⁴ sont choisis de manière indépendante parmi un groupe phényle ou un groupe alkyle à chaîne droite ou à chaîne ramifiée qui contient de 1 à 10 atomes de carbone, ou bien R³ et R⁴ pris ensemble avec l'atome d'azote représentent un groupe hétérocyclique contenant un ou plusieurs atomes d'azote, qui contient de 4 à 12 atomes de carbone ou bien R⁶, R⁷ et R⁸ pris ensemble avec l'atome de silicium représentent une structure qui répond à la formule 4 : 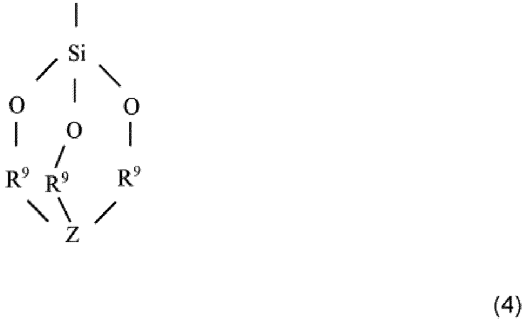
dans laquelle R⁹ est choisi parmi un groupe alcanediyle à chaîne droite ou à chaîne ramifiée qui contient de 1 à 4 atomes de carbone et Z représente un atome d'azote ou un groupe qui répond à la formule 5 : 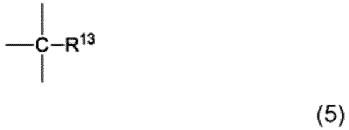
dans laquelle R¹³ est choisi parmi un groupe alkyle qui contient de 1 à 8 atomes de carbone.

4. Procédé selon la revendication 3, dans lequel le réactif fonctionnalisé à base d'aluminium est choisi parmi le groupe constitué par A, B ou C tels qu'ils sont indiqués ci-après, dans lequel Et représente un groupe éthyle et Me représente un groupe méthyle :
